# EUROPÄISCHE PATENTANMELDUNG

(11) **EP 1 591 888 A1**
(43) Veröffentlichungstag der Anmeldung: **02.11.2005**
(21) Anmeldenummer: 04010019.0
(22) Anmeldetag: 27.04.2004
(51) Int. Cl.: G06F 9/44

(54) **Sammlung und Übertragung von Suchanfragen an ein integriertes Hilfe-System**

(71) Anmelder: SIEMENS AKTIENGESELLSCHAFT, 80333 München (DE)
(72) Erfinder: Denzlein, Michael, 91056 Erlangen (DE)

(57) **Zusammenfassung**

Die Erfindung betrifft ein System zum Sammeln und Übertragen von Suchanfragen eines Anwenders an eine integrierte Online-Hilfe mit einem Hilfesystem (1) für eine Software-Applikation auf einer lokalen Rechnereinheit (2), mit Mitteln (3) zur Eingabe von Suchanfragen eines Anwenders an das Hilfesystem und mit einem Modul (4) zum Speichern der Suchanfragen auf der lokalen Rechnereinheit (2), wobei die gespeicherten Suchanfragen über eine Kommunikationseinrichtung (5) an die und/oder den Hersteller (6) der Software-Applikation übertragbar sind, so dass die Übertragung der gespeicherten Suchanfragen nach Freigabe durch Erlaubnis des Anwenders vorgesehen ist.

## Beschreibung

Die Erfindung betrifft ein System zum Sammeln und Übertragen von Suchanfragen eines Anwenders an eine integrierte Online-Hilfe gemäß dem Anspruch 1. Des Weiteren betrifft die Erfindung ein entsprechendes Verfahren.

Für den einfachen Umgang mit Software-Applikationen im Anwenderbereich stehen einem Benutzer einer Software-Applikation in der Regel integrierte Hilfesysteme zur Verfügung. Diese Hilfesysteme sind in der Regel derart ausgebildet, dass ein Benutzer einer Software-Applikation sogenannte Suchbegriffe in das Hilfesystem eingibt und von der Online-Hilfe anschließend eine Antwort, welche mit dem eingegebenen Suchbegriff im Zusammenhang steht, erhält.

Hierbei sind die möglichen Suchbegriffe in der Regel durch eine technische Redaktion von Seiten des Herstellers der Software-Applikation vorgegeben. Das Hilfesystem ist in der Regel in Form einer integrierten Anwender-Dokumentation realisiert. Für die Eingabe von Suchbegriffen stehen heutzutage mehrere Möglichkeiten, beispielsweise eine Stichwortsuche oder eine Indexsuche, zur Verfügung.

Bei dem Umgang mit derartigen Hilfesystemen führen jedoch häufig Anfragen des Anwenders an das System nicht direkt zum Ziel, da die vom Anwender verwendete Terminologie sich von der der technischen Redaktion unterscheidet. Dies führt dazu, dass vom Anwender nach falschen oder nicht hinterlegten Stichworten gesucht wird, welche von der technischen Redaktion nicht im System implementiert wurden. Bei der Arbeit mit dem Hilfesystem muss der Benutzer somit selbstständig versuchen, durch Umformulierung seines Suchbegriffs oder durch die Verwendung von Synonymen zum Ziel zu kommen und Hilfe für sein vorliegendes Problem zu erhalten.

Aus der US 2001/0033294 A1 ist eine Methode und ein System zur Pflege einer Webseite bekannt, bei der Suchanfragen sowie eingegebene Fragen in normaler Sprache in ein elektronisches Hilfesystem auf der Webseite automatisch gesammelt werden und anschließend an die Administratoren der Webseite übertragen werden.

Hierbei wird gleichzeitig das Nutzerverhalten auf der Webseite registriert und automatisch übertragen. Die Administratoren können anschließend die übertragenen Daten auswerten und die Webseite bezüglich der Nutzeranforderungen verbessern.

Aufgabe der vorliegenden Erfindung ist es, ein System sowie ein Verfahren anzugeben, bei dem einem Softwarehersteller, insbesondere im Automatisierungsumfeld, eine Rückmeldung über die vom Benutzer gestellten Suchanfragen an ein Hilfesystem gegeben wird.

Die Aufgabe wird erfindungsgemäß gelöst durch ein System zum Sammeln und Übertragen von Suchanfragen eines Anwenders an eine integrierte Online-Hilfe, mit einem Hilfesystem für eine Software-Applikation auf einer lokalen Rechnereinheit, mit Mitteln zur Eingabe von Suchanfragen eines Anwenders an das Hilfesystem, mit einem Modul zum Speichern der Suchanfragen auf der lokalen Rechnereinheit, wobei die gespeicherten Suchanfragen über eine Kommunikationseinrichtung an die und/oder den Hersteller der Software-Applikation übertragbar sind, wobei die Übertragung der gespeicherten Suchanfragen nach Freigabe durch Erlaubnis des Anwenders vorgesehen ist.

Die Aufgabe wird weiterhin durch ein entsprechendes Verfahren zum Sammeln und Übertragen von Suchanfragen eines Anwenders an eine integrierte Online-Hilfe gelöst.

Der Vorteil hierbei ist, dass alle Suchanfragen, die das Online-Hilfesystem entgegennimmt, gespeichert werden. Die gespeicherten Suchanfragen werden anschließend - mit Erlaubnis des Benutzers - zu bestimmten Zeitpunkten an den Hersteller der Software-Applikation übermittelt. Der Software-Hersteller kann anschließend die von den unterschiedlichen Kunden eingegebenen Suchanfragen analysieren und seine Anwender-Dokumentation verbessern. Hierdurch wird der Software-Hersteller in die Lage versetzt, häufig gestellte Fragen der Anwender am entsprechenden Bedarf der Benutzer auszurichten. Er kann außerdem auf den wirklichen und nicht ausschließlich auf den vermuteten Wissensstand der Benutzer eingehen. Die Stichworte im entsprechenden Index kann er erweitern, so dass er Rücksicht nehmen kann auf die von den Anwendern abgefragten Begriffe. Der Hersteller kann weiterhin Synonyme vorschlagen oder in die entsprechenden Indexlisten eintragen. Fehlende Informationen in der Hilfe kann der Hersteller auf Basis der analysierten Daten ergänzen.

Weitere vorteilhafte Ausbildungen der Erfindung sind in den abhängigen Ansprüchen angegeben.

Es ist für den Hersteller insbesondere möglich, die Suchanfragen an eine Sammeladresse übermitteln zu lassen. Hierbei können beispielsweise auch mehrere Hersteller die an ihre Hilfesysteme gestellten Suchanfragen an eine gemeinsame Sammeladresse übertragen lassen. Die vom Anwender der Software-Applikation eingegebenen Daten werden an die entsprechende Adresse im Klartext übertragen, so dass ein Benutzer sehen kann, welche Daten dann wirklich übertragen werden. Hierdurch können Vorbehalte aufgrund des Datenschutzes ausgeräumt werden. Der Anwender ist jederzeit darüber informiert, welche Informationen dem Hersteller zur Verfügung gestellt werden. Des Weiteren handelt es sich bei den Suchabfragen nicht um für einen Benutzer als sicherheitsrelevant eingestufte Informationen, da es sich nur um Anfragen zu der entsprechenden Software des Herstellers handelt und nicht um Daten aus der laufenden Arbeit des Benutzers. Insbesondere im Automatisierungsumfeld ist hierbei sicherzustellen, dass keine Daten über den Herstellungs- bzw. Produktionsprozess an den Software-Hersteller übertragen werden.

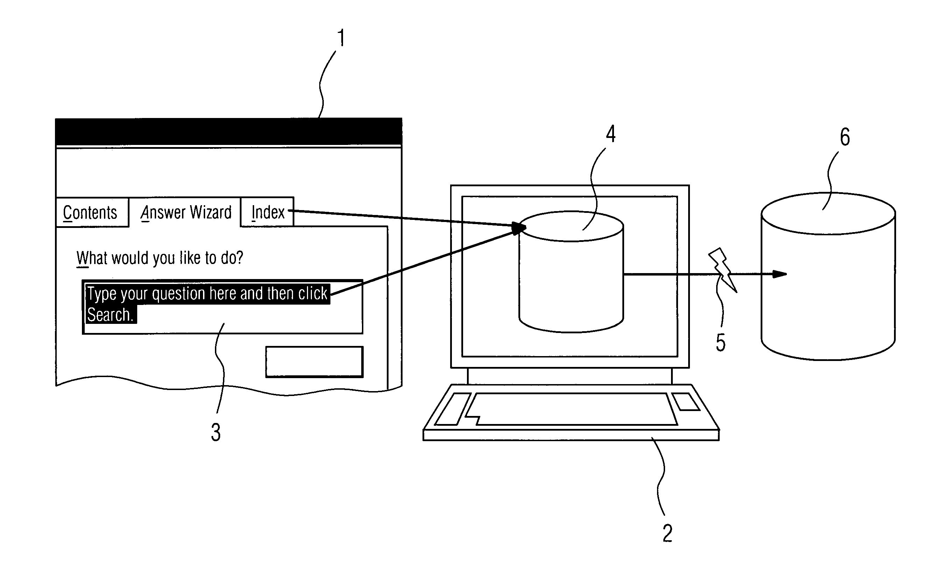

Im Folgenden wird die Erfindung anhand des in der Figur dargestellten Ausführungsbeispiels näher beschrieben und erläutert:

Die Figur zeigt ein System zum Sammeln und Übertragen von Suchanfragen eines Anwenders an eine integrierte Online-Hilfe. Hierbei steht im Rahmen einer Software-Applikation ein Hilfesystem 1 für den Anwender zur Verfügung. Das Hilfesystem verfügt über die Möglichkeit, über einen Index bestimmte Informationen zu erhalten und es verfügt weiterhin über die Möglichkeit, Suchanfragen mit Hilfe von Eingabemitteln 3 direkt an das System zu stellen. Die von einem Anwender in dem Hilfesystem 1 eingegebenen Suchanfragen und die abgefragten Begriffe des Index werden auf einem Speichermodul 4 lokal vor Ort auf dem PC bzw. der Rechnereinheit 2 des Anwenders gespeichert. Die gespeicherten Suchanfragen können über eine Kommunikationseinrichtung 5 an einen Software-Hersteller 6 übermittelt werden. Hierbei können sie insbesondere direkt an eine Datenbank des Software-Herstellers gesendet werden. Die Übertragung der gespeicherten Suchanfragen erfolgt dabei nach Freigabe der entsprechenden Suchanfragen durch Erlaubnis vom Anwender. Eine automatische Übertragung der vom Anwender gestellten Suchanfragen an den Software-Hersteller ist somit unterbunden. Der Anwender der Software-Applikation hat es somit selbst in der Hand, die von ihm gestellten Anfragen als Daten für eine Auswertung zur Verbesserung des gesamten Systems an den Hersteller zu übertragen. Die vor Ort auf der Rechnereinheit 2 gesammelten Daten können hierbei an verschiedene Adressen eines Herstellers oder auch an eine Sammeladresse übertragen werden. Die Übertragung der Daten über die Kommunikationseinrichtung 5 erfolgt in Form von Klartext. Auf Basis der übertragenen Daten kann der Software-Hersteller seine Anwender-Dokumentation bzw. das Hilfesystem 1 verbessern.

## Patentansprüche

1. System zum Sammeln und Übertragen von Suchanfragen eines Anwenders an eine integrierte Online-Hilfe,
- mit einem Hilfesystem (1) für eine Software-Applikation auf einer lokalen Rechnereinheit (2),
- mit Mitteln (3) zur Eingabe von Suchanfragen eines Anwenders an das Hilfesystem,
- mit einem Modul (4) zum Speichern der Suchanfragen auf der lokalen Rechnereinheit (2),
- wobei die gespeicherten Suchanfragen über eine Kommunikationseinrichtung (5) an die und/oder den Hersteller (6) der Software-Applikation übertragbar sind,
**dadurch gekennzeichnet,**
**dass** die Übertragung der gespeicherten Suchanfragen nach Freigabe durch Erlaubnis des Anwenders vorgesehen ist.

2. System nach Anspruch 1,
**dadurch gekennzeichnet,**
**dass** die Software-Applikation eine Automatisierungsanwendung ist.

3. System nach Anspruch 1 oder 2,
**dadurch gekennzeichnet,**
**dass** die gespeicherten Suchanfragen zur Übertragung an eine Sammeladresse des und/oder der Software-Hersteller vorgesehen sind.

4. System nach einem der vorhergehenden Ansprüche,
**dadurch gekennzeichnet,**
**dass** die gespeicherten Suchanfragen zur Übertragung in Form von Klartext vorgesehen sind.

5. System nach einem der vorhergehenden Ansprüche,
**dadurch gekennzeichnet,**
**dass** die an den und/oder die Hersteller übertragenen Suchanfragen in Bezug auf ihre Häufigkeit auswertbar sind.

6. Verfahren zum Sammeln und Übertragen von Suchanfragen eines Anwenders an eine integrierte Online-Hilfe,
- bei dem ein Anwender Suchanfragen zu einer Software-Applikation in ein Hilfesystem eingibt,
- bei dem die eingegebenen Suchanfragen auf einer lokalen Rechnereinheit gespeichert werden,
- wobei die gespeicherten Suchanfragen über eine Kommunikationseinrichtung an die und/oder den Hersteller der Software-Applikation übertragen werden,
**dadurch gekennzeichnet,**
**dass** die Übertragung der gespeicherten Suchanfragen nach Freigabe durch Erlaubnis des Anwenders erfolgt.

7. Verfahren nach Anspruch 6,
**dadurch gekennzeichnet,**
**dass** die Suchanfragen an eine Software-Applikation einer Automatisierungsanwendung gestellt werden.

8. Verfahren nach Anspruch 6 oder 7,
**dadurch gekennzeichnet,**
**dass** die gespeicherten Suchanfragen an eine Sammeladresse des und/oder der Software-Hersteller übertragen werden.

9. Verfahren nach einem der Ansprüche 6 bis 8,
**dadurch gekennzeichnet,**
**dass** die gespeicherten Suchanfragen in Form von Klartext übertragen werden.

10. Verfahren nach einem der Ansprüche 6 bis 9,
**dadurch gekennzeichnet,**
**dass** die an den und/oder die Hersteller übertragenen Suchanfragen in Bezug auf ihre Häufigkeit ausgewertet werden.
